# EUROPÄISCHE PATENTSCHRIFT

(11) **EP 1 957 332 B1**
(45) Veröffentlichungstag und Bekanntmachung des Hinweises auf die Patenterteilung: **22.12.2010**
(21) Anmeldenummer: 06807630.6
(22) Anmeldetag: 27.10.2006
(51) Int. Cl.: B60T 8/48, B60T 8/40

(54) **BREMSANLAGE FÜR EIN FAHRZEUG**
BRAKE SYSTEM FOR A VEHICLE
SYSTEME DE FREINAGE POUR UN VEHICULE

(30) Priorität: 01.12.2005 DE 102005057301
(43) Veröffentlichungstag der Anmeldung: 20.08.2008
(73) Patentinhaber: ROBERT BOSCH GMBH, 70442 Stuttgart (DE)
(72) Erfinder: SCHAEFER, Ernst-Dieter, 74336 Brackenheim (DE); BUTZ, Thomas, 70825 Korntal-Muenchingen (DE); MICHALSKI, Guy-Edward, 64293 Darmstadt (DE); MUNOZ GRESCHUCHNA, Marcel, 74251 Lehrensteinsfeld (DE); DOBERSCHUETZ, Christian, 71672 Marbach (DE); BREIT, Ralf, 71711 Steinheim A. D. Murr (DE)
(86) Internationale Anmeldenummer: PCT/EP2006/067893
(87) Internationale Veröffentlichungsnummer: WO 2007/062945

(56) Entgegenhaltungen:
- EP-A- 1 733 942
- WO-A-99/64283
- DE-A1- 19 960 336
- JP-A- 10 203 330

## Beschreibung

### Stand der Technik

Die vorliegende Erfindung betrifft eine Bremsanlage für ein Fahrzeug mit einer im Bremskreis angeordneten Rückförderpumpe.

Bremsanlagen für Fahrzeuge sind aus dem Stand der Technik in unterschiedlichen Ausgestaltungen bekannt. üblicherweise werden Bremsanlagen mit zwei voneinander getrennten Bremskreisen verwendet. Ferner weisen die Bremskreise üblicherweise Regelungseinrichtungen wie eine Antischlupfregelung oder eine Fahrdynamikregelung (ESP) auf, um die Sicherheit des Fahrzeugs bei verschiedenen Fahrzuständen zu verbessern. Zur Rückförderung eines Hydraulikfluids werden in dem Bremskreis Pumpen verwendet. Hierbei ist pro Bremskreis üblicherweise wenigstens eine Pumpe vorgesehen.

Eine Bremsanlage gemäß den Merkmalen des Oberbegriffs des Anspruchs 1 ist beispielsweise bekannt aus der JP 10 203330 A. Eine Rückfördereinrichtung dieser Bremsanlage umfasst mehrere Pumpeneinrichtungen, die von jeweils einem Einlassventil und einem Auslassventil gesteuert sind. Der Antrieb der Pumpeneinrichtungen erfolgt derart, dass die einzelnen Pumpeneinrichtungen zueinander versetzte Förderzyklen aufweisen. Nachteilig an der bekannten Rückfördereinrichtung ist, dass ein in einer Ansaugphase einer Pumpeneinrichtung erzeugter Unterdruck am jeweiligen Einlassventil der anderen Pumpeneinrichtung anliegen kann und sich dadurch negativ auf die Förderleistung der Rückfördereinrichtung auswirkt.

### Offenbarung der Erfindung

Die erfindungsgemäße Bremsanlage für ein Fahrzeug mit den Merkmalen des Patentanspruchs 1 weist demgegenüber den Vorteil auf, dass sie eine verbesserte Förderleistung aufweist. Dies wird dadurch erreicht, dass die Bremsanlage eine Rückfördereinrichtung umfasst, welche wenigstens eine erste Pumpeneinrichtung und eine zweite Pumpeneinrichtung umfasst, welche hydraulisch parallel angeordnet sind. Die erste und zweite Pumpeneinrichtung weisen jeweils ein unmittelbar daran angeordnetes Einlassventil und ein Auslassventil auf. Ferner werden die erste und zweite Pumpeneinrichtung in einem zueinander versetzten Förderzyklus betrieben, um eine möglichst konstante Förderleistung bereitzustellen, ohne dass Pulsationen auftreten. Es wird unter einem zueinander versetzten Förderzyklus verstanden, dass sich z.B. die erste Pumpeneinrichtung in der Ansaugphase befindet und die zweite Pumpeneinrichtung in der Druckphase. Selbstverständlich kann der versetzte Förderzyklus auch derart sein, dass sich gleiche Phasen auch teilweise überlappen können. Erfindungsgemäß ist nun ferner in jeder Ansaugleitung jeder Pumpeneinrichtung ein zusätzliches Ventil angeordnet, das verhindert, dass in einer Ansaugphase einer der Pumpeneinrichtungen ein hierdurch erzeugter Unterdruck in einer Zuführleitung an einer anderen Pumpeneinrichtung anliegt. Um einen besonders einfachen Aufbau und eine besonders kostengünstige Lösung bereitzustellen, ist das zusätzliche Ventil als Rückschlagventil ohne Feder ausgebildet. Somit wird ein nicht vorgespanntes Rückschlagventil verwendet, welches lediglich durch das Medium geöffnet bzw. geschlossen wird. Derartige Ventile sind ferner sehr wartungsarm.

Somit können erfindungsgemäß zwei oder drei oder mehr Pumpeneinrichtungen parallel zueinander betrieben werden, ohne dass nachteilige Auswirkungen aufgrund der jeweils versetzten Förderzyklen der einzelnen Pumpeneinrichtungen auftreten. Somit können Überschneidungen der Pumpeneinrichtungen in der jeweiligen Saugphase auftreten, ohne dass ein unerwünschter Unterdruck an einer Pumpeneinrichtung anliegt. Dadurch kann eine höhere Förderleistung erreicht werden und ferner ist auch eine Saugstromführung insbesondere in einer gemeinsamen Ansaugleitung der Pumpeneinrichtungen verbessert, was zu reduzierten Verlusten führt. Somit kann die erfindungsgemäße Rückfördereinrichtung einen verbesserten Wirkungsgrad bereitstellen. Die erfindungsgemäße Lösung ist dabei besonders einfach und kann sehr kostengünstig bereitgestellt werden.

Die Unteransprüche zeigen bevorzugte Weiterbildungen der Erfindung.

Bevorzugt ist ein Leitungsvolumen eines Leitungsabschnitts, welcher zwischen einem zusätzlichen Ventil und einem Einlassventil einer ersten Pumpeneinrichtung liegt, ungefähr gleich einem noch anzusaugenden Volumen einer sich gerade in der Ansaugphase befindlichen zweiten Pumpeneinrichtung. Dadurch kann sichergestellt werden, dass eine notwendige Fluidmenge der ersten Pumpeneinrichtung, welche sich gerade am Beginn der Ansaugphase befindet, ohne Probleme aus dem vorhandenen Leitungsvolumen angesaugt werden kann, bis die zweite Pumpeneinrichtung den Ansaugvorgang abgeschlossen hat.

Besonders bevorzugt ist ein Leitungsvolumen zwischen einem zusätzlichen Ventil und einem Einlassventil einer Pumpeneinrichtung gleich oder größer als ein gesamtes Füllvolumen einer Pumpeneinrichtung. Dadurch kann die gesamte Ansaugmenge aus dem Leitungsvolumen angesaugt werden.

Vorzugsweise sind in einem Bremskreis genau drei Pumpeneinrichtungen angeordnet.

Weiter bevorzugt ist die Rückfördereinrichtung eine Radialkolbenpumpe und sind die Pumpeneinrichtungen Pumpenelemente der Radialkolbenpumpe. Wenn drei Pumpenelemente einer Radialkolbenpumpe als Rückfördereinrichtung vorgesehen sind, können diese in einem um 120° Drehwinkel zueinander versetzten Förderzyklus betrieben werden. Die Pumpenelemente können dabei auf einer oder auf zwei Exzenteranordnungen angeordnet sein, wobei die Saugphase jeweils eines Pumpenelements einem 180°-Drehwinkel entspricht. Die Verwendung einer Radialkolbenpumpe mit drei Pumpenelementen als Fördereinrichtung ermöglicht einen besonders kompakten und einfachen Aufbau. Vorzugsweise umfasst die Bremsanlage einen ersten und zweiten Bremskreis, wobei in jedem Bremskreis wenigstens eine erste und zweite Pumpeneinrichtung angeordnet ist.

Alternativ kann die Rückfördereinrichtung auch durch drei separate, parallel angeordnete Pumpen gebildet werden.

### Zeichnung

Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische Darstellung einer Bremsanlage gemäß einem Ausführungsbeispiel der vorliegenden Erfindung und
- Figur 2: eine vergrößerte Teilansicht einer Rückfördereinrichtung der in Figur 1 gezeigten Bremsanlage.

### Beschreibung der Ausführungsbeispiele

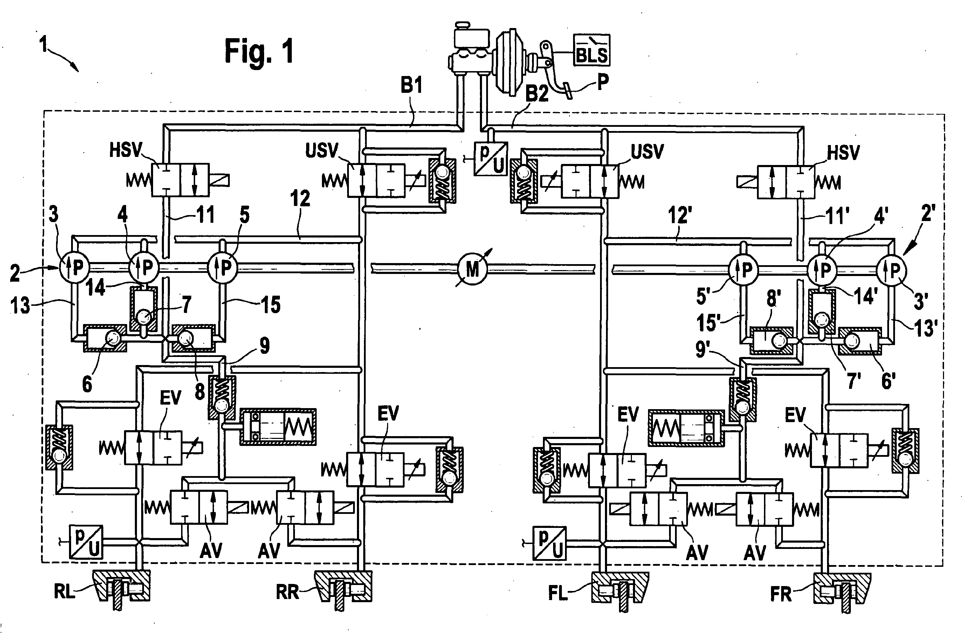

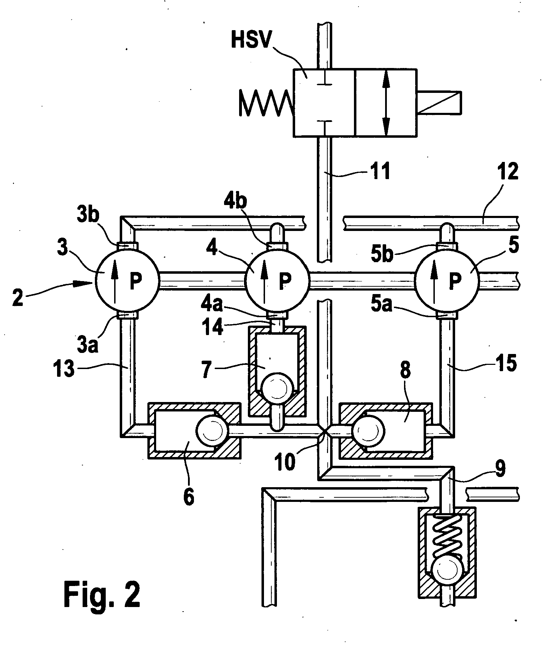

Nachfolgend wird unter Bezugnahme auf die Figuren 1 und 2 eine Bremsanlage 1 gemäß einem Ausführungsbeispiel der Erfindung beschrieben. Die Bremsanlage 1 ist eine Bremsanlage für ein Fahrzeug und weist einen ersten Bremskreis B1 und einen zweiten Bremskreis B2 auf. Die Bremskreise weisen einen bekannten Aufbau mit Einlassventilen EV, Auslassventilen AV, einem Umschaltventil USV und einem Hochdruckschaltventil HSV auf. Die Bremskreise B1 und B2 sind mit einem Hauptbremszylinder, welcher über ein Bremspedal P betätigt wird, hydraulisch verbunden. Der ersten Bremskreis B1 ist dabei mit den hinteren Radbremszylindern RL und RR verbunden und der Bremskreis B2 ist mit den vorderen Radbremszylindern FL und FR verbunden. Die Bremsanlage 1 ist dabei als elektrohydraulische Bremse ausgebildet.

Wie insbesondere aus Figur 1 ersichtlich ist, sind die Auslassventile AV über eine gemeinsame Ansaugleitung 9 mit einer Rückfördereinrichtung 2 verbunden. Wie in Figur 1 gezeigt, umfasst die Rückfördereinrichtung 2 des ersten Bremskreises B1 eine erste Pumpeneinrichtung 3, eine zweite Pumpeneinrichtung 4 und eine dritte Pumpeneinrichtung 5. Die Rückfördereinrichtung 2 ist als Radialkolbenpumpe ausgebildet und die Pumpeneinrichtungen 3, 4, 5 sind dabei jeweils Pumpenelemente der Radialpumpe. Wie insbesondere aus Figur 2 ersichtlich ist, verzweigt sich die gemeinsame Ansaugleitung 9 an einer Verzweigung 10 in Verzweigungsleitungen zu den drei Pumpeneinrichtungen 3, 4, 5 und eine Saugstromleitung 11, welche mit dem Hauptdruckschaltventil HSV verbunden ist. Jeder der drei Pumpeneinrichtungen 3, 4, 5 ist dabei eine eigene Zuführleitung zugeordnet. Genauer ist der ersten Pumpeneinrichtung 3 eine erste Zuführleitung 13, der zweiten Pumpeneinrichtung 4 eine zweite Zuführleitung 14 und der dritten Pumpeneinrichtung 5 eine dritte Zuführleitung 15 zugeordnet. In jeder der drei Zuführleitungen 13, 14, 15 ist jeweils ein zusätzliches Ventil angeordnet. Genauer ist in der ersten Zuführleitung 13 ein erstes zusätzliches Ventil 6, in der zweiten Zuführleitung 14 ein zweites zusätzliches Ventil 7 und in der dritten Zuführleitung 15 ein drittes zusätzliches Ventil 8 angeordnet. Die zusätzlichen Ventile 6, 7, 8 sind dabei gleich ausgebildet und sind als nicht vorgespannte Rückschlagventile vorgesehen. Die zusätzlichen Ventile 6, 7, 8 werden somit nur durch das Hydraulikfluid geöffnet bzw. geschlossen. Von daher sind sie sehr kostengünstig bereitstellbar und robust aufgebaut. Die Anordnung der zusätzlichen Ventile 6, 7, 8 ist dabei derart, dass sie in Richtung der Pumpeneinrichtungen 3, 4, 5 öffnen. Eine Rückfördereinrichtung 2' des zweiten Bremskreises B2 ist gleich aufgebaut wie die Rückfördereinrichtung 2 im ersten Bremskreis B1 und mit gleichen Bezugszeichen bezeichnet, die zusätzlich noch einen aufweisen.

Wie aus Figur 2 gezeigt, ist an der ersten Pumpeneinrichtung 3 ein Einlassventil 3a und ein Auslassventil 3b, an der zweiten Pumpeneinrichtung 4 ein Einlassventil 4a und ein Auslassventil 4b und an der dritten Pumpeneinrichtung 5 ein Einlassventil 5a und ein Auslassventil 5b vorgesehen. Die Einlassventile 3a, 4a, 5a und Auslassventile 3b, 4b, 5b öffnen dabei in der Ansaug- bzw. Druckphase der einzelnen Pumpeneinrichtungen. Die drei Pumpeneinrichtungen 3, 4, 5 fördern dabei in eine gemeinsame Abführleitung 12, welche in den Bremskreisen B1, B2 jeweils in einem Abschnitt vor den Einlassventilen EV mündet.

Wie insbesondere aus Figur 2 ersichtlich ist, sind die zusätzlichen Ventile 6, 7, 8 jeweils in den Zuführleitungen 13, 14, 15 zu den Pumpeneinrichtungen 3, 4, 5 angeordnet. Ein Leitungsvolumen zwischen einem zusätzlichen Ventil 6, 7, 8 und dem jeweiligen Einlassvenfil 3a, 4a, 5a in den Zuführleitungen 13, 14, 15 ist dabei für jede Zuführleitung vorzugsweise gleich groß ausgelegt. Das Volumen zwischen dem zusätzlichen Ventil und dem Einlassventil ist dabei vorzugsweise derart gewählt, dass es zumindest für eine Teilfüllung der jeweiligen Pumpeneinrichtung ausgelegt ist, um bei Beginn der Saugphase der jeweiligen Pumpeneinrichtung eine Teilfüllung dieser Pumpeneinrichtung zu ermöglichen. Da im vorliegenden Ausführungsbeispiel die drei Pumpeneinrichtungen 3, 4, 5 Pumpenelemente einer Radialkolbenpumpe sind, beginnen die jeweiligen Saugphasen der Pumpeneinrichtungen 3, 4, 5 jeweils um einen Drehwinkel von 120° versetzt. Da die Saugphase jeder Pumpeneinrichtung 3, 4, 5 jeweils einem Drehwinkel von 180° entspricht, ergeben sich Überschneidungen von Pumpeneinrichtung zu Pumpeneinrichtung in der Saugphase. Dadurch würde jede Pumpeneinrichtung zu Beginn ihrer Saugphase immer über einen Drehwinkel von 60° mit einem Unterdruck von einer anderen Pumpeneinrichtung beaufschlagt, welche sich schon in der Endphase der Saugphase befindet. Da jedoch erfindungsgemäß die zusätzlichen Ventile 6, 7, 8 in den Zuführleitungen 13, 14, 15 angeordnet sind, ist zu Beginn einer Saugphase einer Pumpeneinrichtung 3, 4, 5 eine hydraulische Trennung zu den anderen Zuführleitungen vorhanden, so dass der Ansaugvorgang aus dem in der Zuführleitung befindlichen Fluidvolumen möglich ist. Dadurch kann erfindungsgemäß ein Füllvorgang realisiert werden, welcher weniger Verluste aufweist. Dadurch kann ein Wirkungsgrad der Rückfördereinrichtung 2 signifikant verbessert werden.

## Patentansprüche

1. Bremsanlage für ein Fahrzeug mit wenigstens einem Bremskreis (B1, B2), welcher wenigstens eine Radbremse (RL, RR, FL, FR), ein Einlassventil (EV), ein Auslassventil (AV) und eine Rückfördereinrichtung (2) umfasst, wobei die Rückfördereinrichtung (2) wenigstens eine erste Pumpeneinrichtung (3) und eine zweite Pumpeneinrichtung (4) umfasst, welche jeweils ein Einlassventil (3a, 4a) und ein Auslassventil (3b, 4b) aufweisen und welche einen zueinander versetzten Förderzyklus aufweisen, **dadurch gekennzeichnet, dass** in jeder Zuführleitung (13, 14, 15) jeder Pumpeneinrichtung (3, 4, 5) ein zusätzliches Ventil (6, 7, 8) angeordnet ist, um zu verhindern, dass in einer Ansaugphase einer der Pumpeneinrichtungen (3, 4, 5) ein hierdurch erzeugter Unterdruck an dem Einlassventil (3a, 4a, 5a) der anderen Pumpeneinrichtung anliegt und dass das zusätzliche Ventil (6, 7, 8) ein nicht vorgespanntes Rückschlagventil ist.

2. Bremsanlage nach Anspruch 1, **dadurch gekennzeichnet, dass** ein Leitungsvolumen einer Zuführleitung (13, 14, 15) zwischen einem zusätzlichen Ventil (6, 7, 8) und einem Einlassventil (3a, 4a, 5a) einer ersten Pumpeneinrichtung gleich einem noch anzusaugenden Volumen einer zweiten Pumpeneinrichtung ist, welche sich schon in der Ansaugphase befindet.

3. Bremsanlage nach Anspruch 1, **dadurch gekennzeichnet, dass** ein Leitungsvolumen einer Zuführleitung (13, 14, 15) zwischen einem Zusatzventil (6, 7, 8) und einem Einlassventil (3a, 4a, 5a) einer Pumpeneinrichtung (3, 4, 5) gleich oder größer als ein gesamtes Füllvolumen einer Pumpeneinrichtung (3, 4, 5) ist.

4. Bremsanlage nach einem der vorhergehenden Ansprüche, **dadurch gekennzeichnet, dass** in einem Bremskreis (B1, B2) genau drei Pumpeneinrichtungen (3, 4, 5) angeordnet sind.

5. Bremsanlage nach einem der vorhergehenden Ansprüche, **dadurch gekennzeichnet, dass** die Rückfördereinrichtung (2) eine Radialkolbenpumpe ist und die Pumpeneinrichtungen (3, 4, 5) Pumpenelemente der Radialkolbenpumpe sind.

6. Bremsanlage nach einem der Ansprüche 1 bis 5 4, **dadurch gekennzeichnet, dass** die Rückfördereinrichtung (2) durch mehrere separate Pumpen gebildet ist.

7. Bremsanlage nach einem der vorhergehenden Ansprüche, **dadurch gekennzeichnet, dass** die Bremsanlage einen ersten Bremskreis (B1) und einen zweiten Bremskreis (B2) umfasst, wobei in jedem der Bremskreise (B1, B2) jeweils eine Rückfördereinrichtung (2) angeordnet ist.

## Claims

1. Brake system for a vehicle having at least one brake circuit (B1, B2) which comprises at least one wheel brake (RL, RR, FL, FR), an inlet valve (EV), an outlet valve (AV) and a return feed device (2), with the return feed device (2) comprising at least one first pump device (3) and one second pump device (4) which have in each case one inlet valve (3a, 4a) and one outlet valve (3b, 4b) and which have offset feed cycles relative to one another, **characterized in that** an additional valve (6, 7, 8) is arranged in each supply line (13, 14, 15) of each pump device (3, 4, 5) in order, in a suction phase of one of the pump devices (3, 4, 5), to prevent a vacuum thereby generated from acting on the inlet valve (3a, 4a, 5a) of the other pump device, and **in that** the additional valve (6, 7, 8) is a non-preloaded check valve.

2. Brake system according to Claim 1, **characterized in that** a line volume of a supply line (13, 14, 15) between an additional valve (6, 7, 8) and an inlet valve (3a, 4a, 5a) of a first pump device is equal to a volume, still to be sucked in, of a second pump device which is already in the suction phase.

3. Brake system according to Claim 1, **characterized in that** a line volume of a supply line (13, 14, 15) between an additional valve (6, 7, 8) and an inlet valve (3a, 4a, 5a) of a pump device (3, 4, 5) is equal to or greater than an entire filling volume of a pump device (3, 4, 5).

4. Brake system according to one of the preceding claims, **characterized in that** precisely three pump devices (3, 4, 5) are arranged in a brake circuit (B1, B2).

5. Brake system according to one of the preceding claims, **characterized in that** the return feed device (2) is a radial piston pump and the pump devices (3, 4, 5) are pump elements of the radial piston pump.

6. Brake system according to one of Claims 1 to 4, **characterized in that** the return feed device (2) is formed by a plurality of separate pumps.

7. Brake system according to one of the preceding claims, **characterized in that** the brake system comprises a first brake circuit (B1) and a second brake circuit (B2), with in each case one return feed device (2) being arranged in each of the brake circuits (B1, B2).

## Revendications

1. Système de freinage pour un véhicule comprenant au moins un circuit de freinage (B1, B2) qui comprend au moins un frein de roue (RL, RR, FL, FR), une soupape d'entrée (EV), une soupape de sortie (AV) et un dispositif de retour (2), le dispositif de retour (2) comprenant au moins un premier dispositif de pompe (3) et un deuxième dispositif de pompe (4) qui présentent chacun une soupape d'entrée (3a, 4a) et une soupape de sortie (3b, 4b) et qui présentent un cycle de transport mutuellement décalé, **caractérisé en ce que,** une soupape supplémentaire (6, 7, 8) est disposée dans chaque conduite d'alimentation (13, 14, 15) de chaque dispositif de pompe (3, 4, 5), afin d'éviter, dans une phase d'aspiration de l'un des dispositifs de pompe (3, 4, 5) qu'une dépression produite de ce fait s'exerce sur la soupape d'entrée (3a, 4a, 5a) de l'autre dispositif de pompe et **en ce que** la soupape supplémentaire (6, 7, 8) est un clapet anti-retour non précontraint.

2. Système de freinage selon la revendication 1, **caractérisé en ce qu'**un volume de conduite d'une conduite d'amenée (13, 14, 15) entre une soupape supplémentaire (6, 7, 8) et une soupape d'entrée (3a, 4a, 5a) d'un premier dispositif de pompe est égal à un volume d'un deuxième dispositif de pompe devant encore être aspiré, le deuxième dispositif de pompe étant déjà dans la phase d'aspiration.

3. Système de freinage selon la revendication 1, **caractérisé en ce qu'**un volume de conduite d'une conduite d'amenée (13, 14, 15) entre une soupape supplémentaire (6, 7, 8) et une soupape d'entrée (3a, 4a, 5a) d'un dispositif de pompe (3, 4, 5) est égal ou supérieur à un volume de remplissage total d'un dispositif de pompe (3, 4, 5).

4. Système de freinage selon l'une quelconque des revendications précédentes, **caractérisé en ce que** trois dispositifs de pompes (3, 4, 5) sont précisément disposés dans un circuit de freinage (B1, B2).

5. Système de freinage selon l'une quelconque des revendications précédentes, **caractérisé en ce que** le dispositif de retour (2) est une pompe à piston radial et les dispositifs de pompes (3, 4, 5) sont des éléments de pompe de la pompe à piston radial.

6. Système de freinage selon l'une quelconque des revendications 1 à 4, **caractérisé en ce que** le dispositif de retour (2) est formé par plusieurs pompes séparées.

7. Système de freinage selon l'une quelconque des revendications précédentes, **caractérisé en ce que** le système de freinage comprend un premier circuit de freinage (B1) et un deuxième circuit de freinage (B2), un dispositif de retour (2) respectif étant disposé dans chacun des circuits de freinage (B1, B2).
